(19) Europäisches Patentamt

**European Patent Office**

**Office européen des brevets**

(11) Veröffentlichungsnummer: **0 068 445**
**A1**

(12) **EUROPÄISCHE PATENTANMELDUNG**

(21) Anmeldenummer: **82105555.5**

(22) Anmeldetag: **24.06.82**

(51) Int. Cl.³: **F 15 B 15/14,** F 15 B 15/06,
B 23 Q 5/26

(30) Priorität: **27.06.81 DE 3125306**
**15.06.82 DE 3222388**

(43) Veröffentlichungstag der Anmeldung: **05.01.83**
**Patentblatt 83/1**

(84) Benannte Vertragsstaaten: **AT BE CH FR GB IT LI LU NL
SE**

(71) Anmelder: **Habermann, Rudi, Kirchstrasse 58,
D-4006 Erkrath 1 (DE)**

(72) Erfinder: **Habermann, Rudi, Kirchstrasse 58,
D-4006 Erkrath 1 (DE)**

(74) Vertreter: **Kuborn, Walter et al, Patentanwälte Kuborn &
Dr. Palgen Mulvanystrasse 2, D-4000 Düsseldorf (DE)**

(54) **Vorschubeinrichtung.**

㉗ Eine Vorschubeinrichtung mit einer zugleich als Geradführung dienenden hydraulischen Kolben/Zylindereinheit, deren Kolbenstange am Ende eine Halterung für das vorzuschiebende Element und am anderen Ende einen mit der Kolbenstange fluchtenden Führungsansatz (13) trägt, der in eine geschlossene mit dem Zylinder verbundene und mit Druckflüssigkeit füllbare Kappe (20) hineinragt. Der Führungsansatz (13) besitzt eine Vielkeilverzahnung, in die ein innenverzahnter Zahnring (15, 115) eingreift. Der Zahnring (15, 115) ist entweder feststehend zwischen dem Ende des Zylinders (2) und dem offenen Ende der Kappe (20) eingespannt oder an dem Zylinder drehbar gelagert und durch einen an dem Zylinder angeordneten Motor (34) antreibbar.

ACTORUM AG

PATENTANWÄLTE
DIPL.-ING. WALTER KUBORN
DIPL.-PHYS. DR. PETER PALGEN
ZUGELASSEN BEIM EUROPAISCHEN PATENTAMT
4000 DÜSSELDORF
MULVANYSTRASSE 2 · TELEFON 63 27 27
TELEGRAMME: KUPAL
KREISSPARKASSE DÜSSELDORF NR. 1 014 463
DEUTSCHE BANK AG., DÜSSELDORF 2 919 207
POSTSCHECK-KONTO: KÖLN 115211-504

4000 DÜSSELDORF, den 15.6.1982
Dr.P./Sch

0068445

Rudi  Habermann
in 4006  Erkrath  1

Vorschubeinrichtung

Die Erfindung bezieht sich auf eine Vorschubeinrichtung der im Oberbegriff des Anspruchs 2 angegebenen Art.

Unter "Vorschubeinrichtungen" sollen Einrichtungen verstanden sein, wie sie in Gestalt der Supporte zur Halterung und zum Vorschub der Bearbeitungswerkzeuge an praktisch jeder Drehmaschine vorhanden sind.
Sie umfassen einen das Werkzeug tragenden Schlitten, der
auf einer Geradführung in Gestalt einer Schwalbenschwanz-
oder Prismenführung gelagert und meist mittels eines Spindelantriebs verschiebbar ist. Es sind auch Supporte bekannt, bei denen der Vorschub durch eine hydraulische
Kolben/Zylindereinheit bewirkt wird. In jedem Fall aber
sind Geradführung und Antrieb getrennte Elemente, die nebeneinander vorhanden sind. Dadurch bedingen die herkömmlichen Supporte einen erheblichen baulichen Aufwand. Dieser wird noch dadurch erhöht, daß die Führungsbahnen gegen das Eindringen von Spänen und sonstigen Verunreinigungen abgedeckt sein müssen.

Eine Vorschubeinrichtung der dem Oberbegriff entsprechenden Art ist aus der DE-OS 26 32 748 bekannt. Die Drehabstützung ist im einzelnen nicht offenbart. Es ist nur ausgeführt, daß der Kolben auch einen nicht kreisförmigen Querschnitt aufweisen kann.

Der Erfindung liegt die Aufgabe zugrunde, eine Vorschubeinrichtung der dem Oberbegriff des Anspruchs 1 entsprechenden Art so auszubilden, daß bei Verwendung einfach herzustellender Teile die Drehabstützung einem hohen Drehmoment widerstehen und die Vorschubeinheit eine hohe Vorschubkraft aufbringen kann.

Diese Aufgabe wird durch die in Anspruch 1 angegebene Erfindung gelöst.

Durch die Drehabstützung ist die Stellung der am Ende der Kolbenstange angebrachten Halterung, die zum Beispiel einen Drehstahl aufnehmen kann, in allen Richtungen eindeutig festgelegt, so daß die Kolben/Zylindereinheit auch die Funktion der bei den üblichen Supporten vorhandenen Schlittenführung übernimmt. Die Zahl der beweglichen Teile ist erheblich verringert, und es sind Platzbedarf und Gewicht der erfindungsgemäßen Vorschubeinrichtung erheblich niedriger als bei einem herkömmlichen Support.

Die Drehabstützung in Gestalt des Zahnringes greift ganz außen an dem Führungsansatz an, der praktisch den gesamten Innenquerschnitt des Zylinders ausfüllen kann. Die Vielkeilverzahnung ergibt eine Vielzahl von Anlageflächen, so daß bei einem bestimmten Drehmoment die spezifische Flächenpressung gering gehalten werden kann. Die Drehabstützung beansprucht keinen über den ohnehin vorhandenen Umriß der Kolben/Zylindereinheit hinausgehenden Raum.

Durch das Vorhandensein der Kappe kann der Druck auch gegen die Endstirnfläche des Führungsansatzes zur Wirkung gebracht werden, so daß in dieser Richtung praktisch der gesamte Innenquerschnitt des Zylinders als Wirkfläche dient. In dieser Richtung kann also bei gleichem Druck der Druckflüssigkeit die maximale Kraft ausgeübt werden.

Die Ausbildung der Drehabstützung als Zahnring zwischen dem Ende des Zylinders und der Kappe hat zur Folge, daß alle Teile fertigungsmäßig günstig gestaltet und einfach montiert und gegebenenfalls wieder demontiert werden können.

Die Drehabstützung kann in einer ersten Ausführung, bei der der Kolben und die Kolbenstange im Zylinder undrehbar festgehalten sein sollen, gemäß Anspruch 2 ausgebildet sein.

Die Erfindung kann aber auch dahingehend ausgestaltet werden, daß die Vorschubeinrichtung nicht nur einen reinen Vorschub, sondern auch eine Drehung ausführen kann.

Dies kann in der in Anspruch 3 wiedergegebenen Weise verwirklicht werden.

Der Zahnring dient hier also nicht nur zum Festhalten einer bestimmten Drehstellung des Kolbens bzw. der Kolbenstange, sondern auch zum Verändern dieser Drehstellung, d.h. zum Übertragen einer Drehantriebsbewegung.

In der bevorzugten Ausführungsform gemäß Anspruch 4 wird die Drehbewegung durch eine Verzahnung übertragen.

Zur Erzielung einer möglichst wenig ausladenden Bauweise empfiehlt sich die Anordnung des Motors dicht neben dem Zylinder bzw. der Kappe gemäß Anspruch 5.

In der Zeichnung sind Ausführungsbeispiele der Erfindung schematisch dargestellt.

Fig. 1 zeigt eine erfindungsgemäße Vorschubeinheit mit undrehbarer Kolbenstange im Längsschnitt;

Fig. 2 zeigt eine Ansicht von oben einer Drehbank, bei der der Reitstock durch eine erfindungsgemäße Vorschubeinheit und der Kreuzsupport durch ein Paar kreuzweise arbeitender erfindungsgemäßer Vorschubeinheiten gebildet ist;

Fig. 3 und 4 zeigen Seitenansicht und Ansicht von oben einer Karusselldrehbank, bei welcher der Support durch eine erfindungsgemäße Vorschubeinheit gebildet ist;

Fig. 5 zeigt ein anderes Ausführungsbeispiel mit drehbarer Kolbenstange im Längsschnitt;

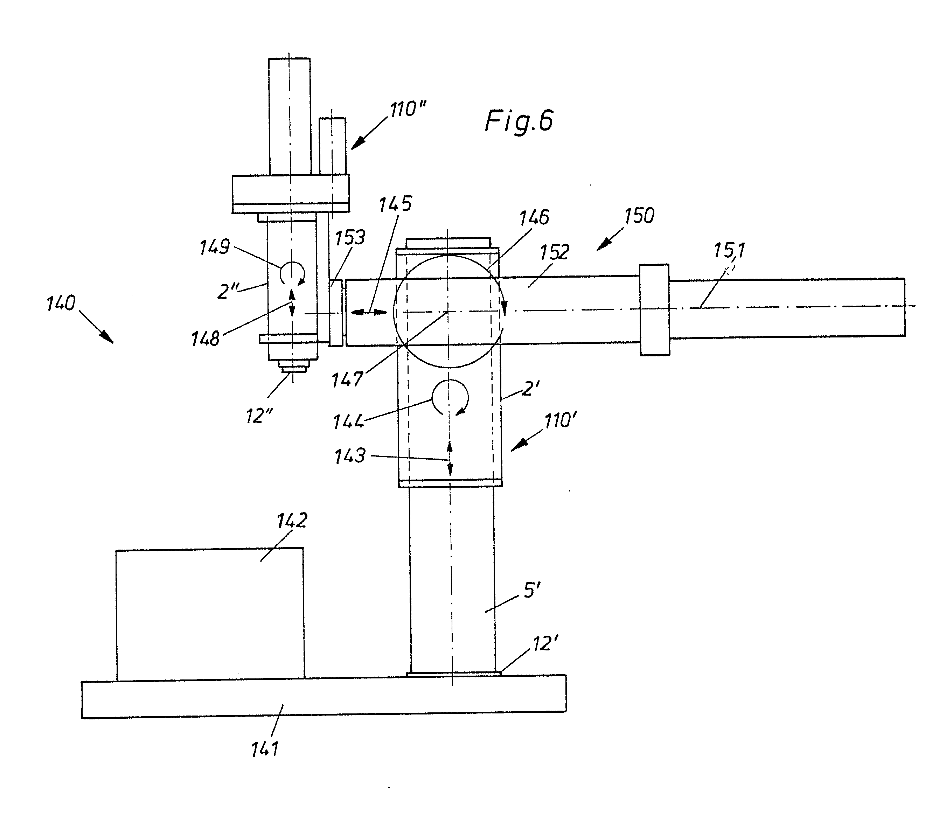

Fig. 6 zeigt einen Anwendungsfall an einer Dreh- oder ähnlichen Bearbeitungsmaschine.

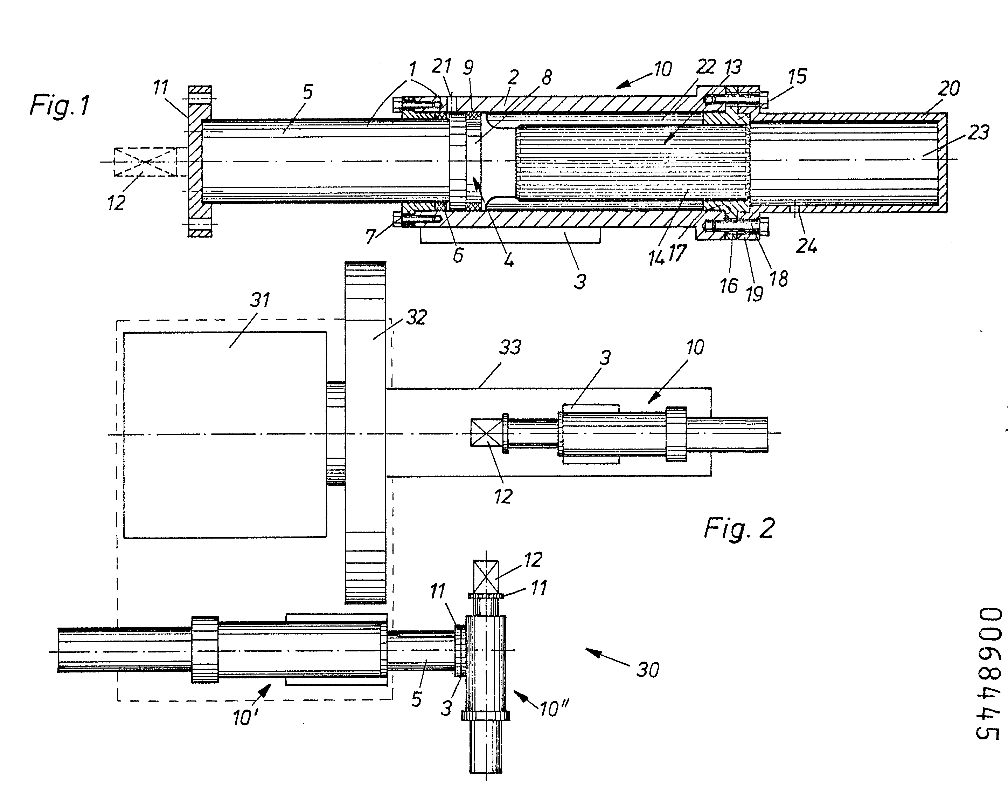

Die in Fig. 1 als Ganzes mit 10 bezeichnete Vorschubeinheit umfaßt eine Kolben/Zylindereinheit 1, die wiederum aus einem Zylinder 2, gegebenenfalls mit einem seitlichen Befestigungsfuß 3, sowie einem Kolben 4 mit einer Kolbenstange 5 besteht. Die Kolbenstange 5 hat einen relativ großen Durchmesser, der etwa 80 % des Innendurchmessers des Zylinders 2 ausmacht, damit die nötige Biegesteifigkeit des aus dem Zylinder 2 frei vorkragenden Teiles der Kolbenstange 5 gegeben ist. Die Kolbenstange 5 ragt aus dem Zylinder 2 an dessen gemäß Fig. 2 linkem Ende nach außen vor, welcher an der Austrittsstelle durch eine Dichtung 6 abgedichtet sowie durch einen mit dem Zylinder 2 stirnseitig verbundenen und mit seinem Innenumfang an der Kolbenstange 5 anliegenden Abschluß- und Führungsring 7 nach links begrenzt ist. Der Kolben 4 besitzt eine Umfangsnut 8, in der ein Kolbenring 9 angeordnet ist, der den Kolben 4 bei seiner Bewegung im Zylinder 2 gegen den Übertritt von Druckflüssigkeit abdichtet.

Am freien Ende der Kolbenstange 5 trägt diese eine Halterung, beispielsweise in Gestalt einer Halteplatte 11 oder eines Mehrkantzapfens 12, wie in Fig. 1 gestrichelt angedeutet ist. Der Kolben 4 besitzt auf der der Kolbenstange 5 abgelegenen Seite einen gleichachsigen zylindrischen Führungsansatz 13, dessen Länge dem in dem Zylinder 2 möglichen Hub des Kolbens 4 entspricht. Der Führungsansatz 13 besitzt eine Vielkeilverzahnung 14, in die ein Zahnring 15 eingreift, der an am in Fig. 1 rechten Ende des Zylinders 2 festgelegt wird. Der Zahnring 15 besitzt einen Randflansch 16, der vor die stirnseitige Endfläche 17 des Zylinders 2 gesetzt ist. Die Befestigung erfolgt mittels Schrauben 18, die zugleich den Fußflansch 19 einer Kappe 20 durchgreifen und somit den Randflansch 16 zwischen der Endfläche 17 und dem Fußflansch 19 einspannen. Der Innenraum der Kappe 20 ist so lang, daß der Führungsansatz 30 ganz darin Platz findet, wenn sich der Kolben 4 in der gemäß Fig. 1 rechten Stellung befindet.

Wenn der Kolben 4 gemäß Fig. 1 nach rechts verlagert werden soll, wird Druckflüssigkeit durch den Durchlaß 21 eingeleitet, wodurch auf der linken Seite des Kolbens 4 ein Überdruck entsteht, der ihn nach rechts bewegt. Der Zylinderraum 22 und das Innere 23 der Kappe 20 sind ebenfalls mit Druckflüssigkeit gefüllt. Der Zahnring 15 dichtet gegenüber dem Führungsansatz 13 nicht hermetisch ab, so daß bei einer Verlagerung des Führungsansatzes 13 Druckflüssigkeit von dem Zylinderraum 22 in den Innenraum 23 und umgekehrt übertreten kann.

- 6 -

Soll der Kolben 4 gemäß Fig. 1 nach links verlagert werden, so wird Druckflüssigkeit über den Durchlaß 24 in das Innere 23 der Kappe 20 geleitet.

In Fig. 2 ist eine Drehbank 30 dargestellt, die einen Spindel- und Getriebekasten 31 umfaßt. Auf der nicht dargestellten Spindel ist eine Planscheibe 32 angebracht, die ein größeres flaches Werkstück, beispielsweise eine Seilscheibe oder eine Keilriemenscheibe spannen kann. Auf dem Maschinenbett 33 ist eine Vorschubeinrichtung 10 der in Fig. 1 wiedergegebenen Art mittels des Befestigungsfußes 3 angebracht. An dem Befestigungs-Mehrkant 12 kann eine Bohreinrichtung oder ein Ausdrehkopf zum Ausdrehen der Nabenbohrung der Seilscheibe vorgesehen sein.

Anstelle des Kreuzsupports der Drehbank 30 ist ein Paar von Vorschubeinrichtungen 10',10" vorgesehen. Die eine Vorschubeinrichtung 10' mit dem längeren Hub ist mit ihrer Achse parallel zur Spindelachse angeordnet und für den Längsvorschub eines Drehwerkzeugs vorgesehen. Die Befestigung dieser Vorschubeinheit 10' erfolgt so, daß sie gegenüber der Planscheibe 32 bzw. dem Maschinenbett 33 unverrückbar ist.

An der Halteplatte 11 am vorderen Ende der Kolbenstange 5 ist eine weitere Vorschubeinheit 10" mit ihrem Befestigungsfuß 3 angebracht. Die Achse der Vorschubeinrichtung 10" verläuft senkrecht zur Spindelachse, so daß die Vorschubeinrichtung 10" einen Quervorschub bewerkstelligen kann. An der Halteplatte 11 der Vorschubeinrichtung 10" oder dem Befestigungs-Mehrkant 12 kann ein Stahlhalter für einen Drehstahl vorgesehen sein. Durch Betätigung beider Vorschubeinrichtungen 10',10" läßt sich der Stahlhalter ebenso in einer Ebene verlagern, wie dies bei einem Kreuzsupport der Fall ist.

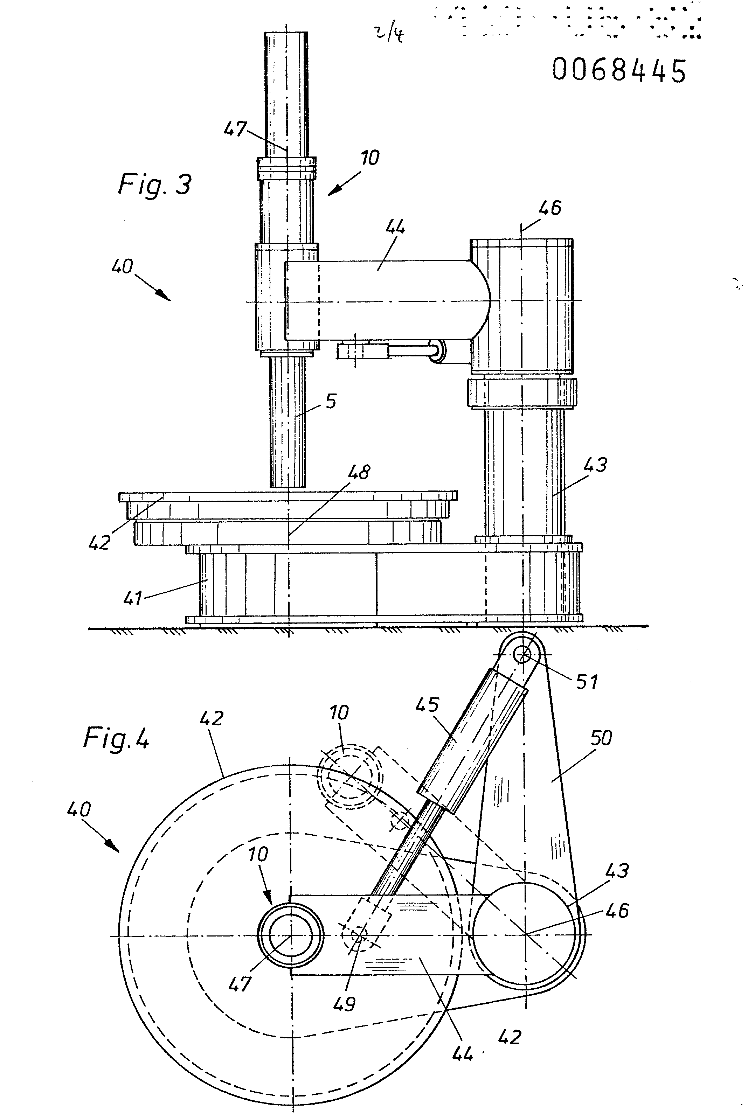

Ein weiteres Anwendungsbeispiel ist die als Ganzes mit 40 bezeichnete Karuselldrehbank der Fig. 3 und 4. Die umfaßt ein Maschinenbett 41, auf welchem die das eigentliche Karussell bildende Planscheibe 42 in einer horizontalen Ebene drehbar gelagert ist und in welchem außerhalb des größten Drehdurchmessers eine vertikale Säule 43 befestigt ist. An der Säule ist mit Abstand oberhalb der Planscheibe 42 ein über die Planscheibe 42 greifender Ausleger 44 schwenkbar gelagert, an welchem wiederum eine Vorschubeinrichtung 10 derart angebracht ist, daß ihre Achse 47 mit der Achse 48 der Planscheibe 42 zur Deckung bringbar ist und das freie Ende der Kolbenstange 5 bis in die Höhe der Oberseite der Planscheibe 42 reicht.

An dem Ausleger 44 greift eine hydraulische Kolben/Zylindereinheit 45 an einer zwischen der Achse 47 der Vorschubeinheit 10 und der Schwenkachse 46 des Auslegers 44 gelegenen Stelle 49 an. Mit der Säule ist ein starrer, sich gemäß Fig. 3 nach hinten erstreckender Arm 50 drehfest verbunden, an dessen freiem Ende bei 51 das andere Ende der Kolben/Zylindereinheit 45 angelenkt ist.

Mittels der Kolben/Zylindereinheit 45 kann somit der Ausleger 44 mit der Vorschubeinrichtung 10 aus der in Fig. 4 ausgezogen wiedergegebenen Stellung, in der sich die Achsen 47 der Vorschubeinrichtung 10 und 48 der Planscheibe 42 decken, in eine in Fig. 4 gestrichelt ausgezogene Stellung verschwenkt werden, in der die Vorschubeinrichtung 10 am Rande der Planscheibe 42 bzw. eines darauf angebrachten kreisrunden Werkstücks steht. In der ausgezogen wiedergegebenen Stellung kann beispielsweise die Nabenbohrung einer auf der Planscheibe 42 angebrachten großen Seilscheibe gebohrt bzw. ausgedreht werden, während die gestrichelt wiedergegebene Stellung der Bearbeitung der Seilrille dient. In beiden Fällen wird das Werkzeug am unteren Ende der Kolbenstange 5 angebracht, deren drehfeste Führung die allseits definierte Festlegung des Werkzeugs bewerkstelligt.

Ein weiteres Anwendungsbeispiel der Erfindung ist ein Bohrreitstock zur Anwendung auf Drehbänken. Das Werkzeug wird an der Kolbenstange der Kolben/Zylindereinheit angebracht und von dieser nichtmitdrehend gehalten. Das Werkstück ist auf der Planscheibe oder im Futter der Drehbank gespannt. Weiterhin kommt eine Verwendung als Kopiereinheit in Gestalt eines Zusatzaggregates für Drehbänke infrage. Auch als Vorschubeinheit für Bohrmaschinen, bei denen das Werkstück umläuft, ist die Erfindung geeignet.

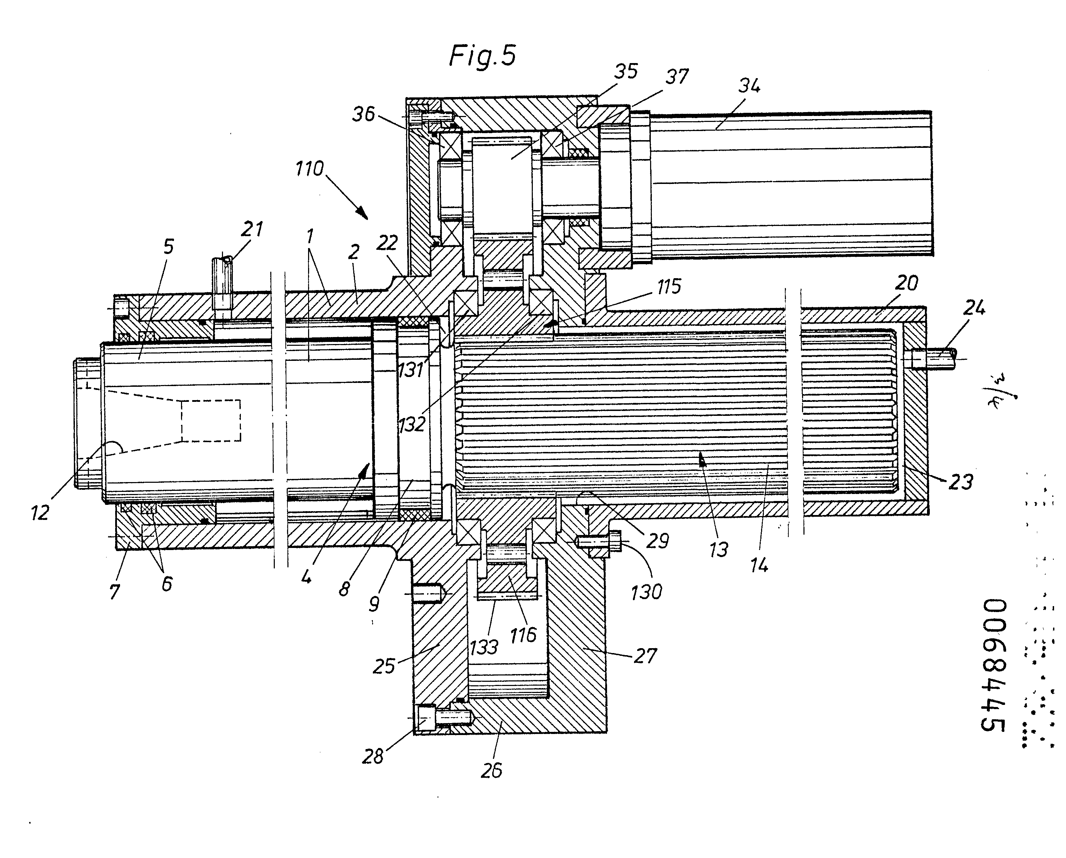

In Fig. 5 ist eine Vorschubeinheit 110 mit drehbarer bzw. angetriebener Kolbenstange wiedergegeben. Soweit die Teile mit Fig. 1 übereinstimmen, sind gleiche Bezugszahlen verwendet und wird auf die Beschreibung zu Fig. 1 verwiesen.

Der Zylinder 2 besitzt an seinem in Fig. 1 rechten Ende einen Radialflansch 25, gegen dessen äußeren Rand die zylindrische Berandung 26 eines flach-topfförmigen Flansches 27 mittels Schrauben 28 verschraubt ist. Der Flansch 27 weist eine zentrale Öffnung 29 auf, die von dem Führungsansatz 13 durchgriffen ist. Der den Flansch 27 durchgreifende und gemäß Fig. 1 nach rechts vorstehende Teil des Führungsansatzes 13 ist von einer Kappe 20 umschlossen, die an ihrem offenen Ende mittels Schrauben 130 am Rand der Öffnung 29 des Flansches 27 befestigt ist. Der Innenraum der Kappe 20 ist so lang, daß der Führungsansatz 13 ganz darin Platz findet, wenn sich der Kolben 4 in der gemäß Fig. 1 äußersten rechten Stellung befindet.

Der Zahnring 115 ist über Lager 131,132 an den Flanschen 25,27 drehbar gelagert. Er besitzt einen Radialflansch 116, der am äußeren Umfang eine Verzahnung 133 trägt. An dem Flansch 27 ist ein mit seiner Achse parallel zur Achse des Zylinders 2 angeordneter hydraulischer Motor 34 befestigt, der sich dicht neben der Kappe 20 erstreckt. Auf der Welle des Motors 34 sitzt ein Ritzel 35, welches auf Lagern 36,37 in den Flanschen 25, 26 gelagert ist und mit seiner Verzahnung in die Verzahnung 133 des Zahnrings 115 eingreift.

Wenn der Kolben 4 gemäß Fig. 1 nach rechts verlagert werden soll, wird Druckflüssigkeit durch den Durchlaß 21 eingeleitet, wodurch auf der linken Seite des Kolbens 4 ein Überdruck entsteht, der ihn nach rechts bewegt. Der Zylinderraum 22 und das Innere 23 der Kappe 20 sind ebenfalls mit Druckflüssigkeit gefüllt. Der Zahnring 115 dichtet gegenüber dem Führungsansatz 13 nicht hermetisch ab, so daß bei einer Verlagerung des Führungsansatzes 13 Druckflüssigkeit von dem Zylinderraum 22 in den Innenraum 23 und umgekehrt übertreten kann.

Soll der Kolben 4 gemäß Fig. 1 nach links verlagert werden, so wird Druckflüssigkeit über den Durchlaß 24 in das Innere 23 der Kappe 20 geleitet.

Soll das in der Kegelbohrung 12 befestigte Werkzeug oder ein entsprechendes Werkstück eine Drehung ausführen, so wird der hydraulische Motor 34 in der einen oder anderen Richtung angetrieben und überträgt seine Drehung auf den Zahnring 115, der dabei den Führungsansatz 13 und somit die Kolbenstange 5 mitnimmt.

In Fig. 2 ist ein Anwendungsbeispiel in Gestalt
einer Karusselldrehmaschine 140 dargestellt. Sie umfaßt
ein Maschinenbett 141 mit einer nur schematisch angedeuteten in einer horizontalen Ebene umlaufenden Planscheibe 142 zum Aufspannen eines Werksücks, beispielsweise einer großen Seilscheibe. Auf dem Maschinenbett
ist eine erste Vorschubeinrichtung 110' angeordnet, die
mit der Halterung 12' am Ende der Kolbenstange 5' auf
dem Maschinenbett 141 befestigt ist. Der Zylinder 2' kann
im Sinne des Pfeiles 143 gehoben und gesenkt und im Sinne
des Pfeiles 144 gedreht werden. Der zugehörige Antriebsmotor 34 ist auf der Rückseite angeordnet und in Fig. 2
nicht sichtbar. An dem Zylinder 2' ist der Zylinder 152
an einer Vorschubeinrichtung 150 angebracht, die in dem
Ausführungsbeispiel lediglich einen reinen Vorschub im
Sinne des Pfeiles 145, jedoch keine Drehung um die horizontale Achse 151 durchzuführen hat. Statt dessen ist jedoch die Verbindung der Zylinder 2' und 152 über eine
Dreheinrichtung vorgenommen, die eine Drehung im Sinne
des Pfeiles 146 um die senkrecht zur Zeichenebene gelegene Achse 147 zustande bringt.

An der Halterung 153 der Vorschubeinrichtung 150
ist der Zylinder 2" einer Vorschubeinrichtung 110" angebracht, die einen Hub im Sinne des Pfeiles 148 und
eine Drehung um die Vertikalachse im Sinne des Pfeiles 149
durchführen kann. Ein in die Halterung 12" eingespanntes
Werkzeug kann also entsprechend bewegt werden.

Auf diese Weise können Bearbeitungsmaschinen,
bei denen Werkstück und/oder Werkzeug in verschiedenen
Koordinaten verlaufende gegenseitige Bewegungen auszuführen haben, unter Zuhilfenahme von Vorschubeinheiten
entsprechend der Vorschubeinheit 10 in Fig. 1 bzw. 110 in
Fig. 5 im Baukastensystem zusammengesetzt werden.

PATENTANWÄLTE
DIPL.-ING. WALTER KUBORN
DIPL.-PHYS. DR. PETER PALGEN
ZUGELASSEN BEIM EUROPÄISCHEN PATENTAMT
4000 DÜSSELDORF
MULVANYSTRASSE 2 · TELEFON 63 27 27
TELEGRAMME: KUPAL
KREISSPARKASSE DÜSSELDORF NR. 1 014 463
DEUTSCHE BANK AG., DÜSSELDORF 2 919 207
POSTSCHECK-KONTO: KÖLN 115 2 11-504

4000 DÜSSELDORF, den 15.6.1982
Dr.P./Sch

0068445

Rudi   H a b e r m a n n
in 4006   E r k r a t h   1


P a t e n t a n s p r ü c h e


1.  Vorschubeinrichtung mit einer zugleich als
Geradführung dienenden hydraulischen Kolben/Zylindereinheit, deren Kolbenstange am Ende einer Halterung für
das vorzuschiebende Element und am anderen Ende einen
mit dem Kolben bzw. der Kolbenstange starr verbundenen
zylindrischen, mit der Kolbenstange fluchtenden Führungsansatz trägt und eine den Vorschub der Kolbenstange zulassende, eine Abweichung von dem reinen Kreisquerschnitt
beinhaltende Drehabstützung für die Kolbenstange aufweist, dadurch gekennzeichnet, daß die Drehabstützung
eine Vielkeilverzahnung (14) des Führungsansatzes (13)
sowie einen mit dem Zylinder (2) verbundenen, innenverzahnten Zahnring (15, 115) umfaßt, dessen Zähne in die Vielkeilverzahnung (14) des Führungsansatzes (13) eingreifen, daß der
Hubweg des Führungsansatzes (13) von einer an den Zylinder
(2) anschließenden, mit der Druckflüssigkeitsquelle in
Verbindung stehenden Kappe (20) umschlossen ist, und daß
der Zahnring (15, 115) einen Radialflansch (16, 116) umfaßt, der
zwischen dem Ende des Zylinders (2) und dem offenen Ende
der Kappe (20) angeordnet ist.

0068445

2. Vorschubeinrichtung nach Anspruch 2, dadurch gekennzeichnet, daß der Radialflansch (16) zwischen dem Ende des Zylinders (2) und dem offenen Ende der Kappe (20) fest eingespannt ist.

3. Vorschubeinrichtung nach Anspruch 1, dadurch gekennzeichnet, daß der Zahnring (115) an dem Zylinder (2) drehbar gelagert und durch einen an dem Zylinder (2) angeordneten Motor (34) antreibbar ist.

4. Vorschubeinrichtung nach Anspruch 3, dadurch gekennzeichnet, daß der Zahnring (115) an seinem Außenumfang eine Verzahnung (133) aufweist, in die ein Antriebsritzel (35) eingreift.

5. Vorschubeinrichtung nach Anspruch 3 oder 4, dadurch gekennzeichnet, daß der Motor (34) mit seiner Achse parallel zur Zylinderachse dicht neben dem Zylinder (2) oder der Kappe (20) angeordnet ist.

0068445

Fig.1

Fig. 2

Rudolf Habermann
5657 Haan

**Fig. 3**

47

10

40

46

44

5

48

42

43

41

Rudolf Habermann
5657 Haan

**Fig. 4**

42

10

40

45

51

50

43

46

10

47

49

44

42

Fig.5

Rudi Habermann
4006 Erkrath

0068445

Fig.6

0068445

Europäisches
Patentamt

EUROPÄISCHER RECHERCHENBERICHT

0068445
Nummer der Anmeldung

EP 82 10 5555.5

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| Y | DE - A - 2 113 466 (M. RICHTER) <br> * ganzes Dokument * <br> -- | 1-5 |
| Y | US - A - 3 528 510 (D.H. PETERSON) <br> * Anspruch 11; Fig. 11 * <br> -- | 1-5 |
| Y | US - A - 2 874 579 (H.M. GEYER) <br> * Spalte 3, Zeile 69 bis Spalte 4, <br> Zeile 13; Fig. 4 * <br> -- | 1-5 |
| A | US - A - 3 313 215 (H. BIERI) <br> * Anspruch 1; Fig. 1, 5 * <br> -- | 1 |
| A | CH - A - 592 252 (PATENT & INVENTIONS <br> LTD.) <br> & DE - A - 2 461 854 <br> -- | |
| A | DE - A - 1 458 666 (E. SIRUGUE) <br> ---- | |

**KLASSIFIKATION DER ANMELDUNG (Int. Cl.³)**

F 15 B 15/14
F 15 B 15/06
B 23 Q 5/26

**RECHERCHIERTE SACHGEBIETE (Int. Cl.³)**

B 23 B 47/22
B 23 Q 5/26
F 15 B 15/00

**KATEGORIE DER GENANNTEN DOKUMENTE**

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Berlin | 24-08-1982 | LEMBLE |